# EUROPEAN PATENT SPECIFICATION

(11) **EP 4 576 378 B1**
(45) Date of publication and mention of the grant of the patent: **25.11.2026**
(21) Application number: 24757274.6
(22) Date of filing: 15.02.2024
(51) Int. Cl.: H01M 50/342, H01M 50/30, H01M 50/204, H01M 50/249

(54) **BATTERY UNIT STRUCTURE AND VEHICLE INCLUDING SAME**
BATTERIEEINHEITSSTRUKTUR UND FAHRZEUG DAMIT
STRUCTURE D'UNITÉ DE BATTERIE ET VÉHICULE LA COMPRENANT

(30) Priority: 15.02.2023 KR 20230020357
(43) Date of publication of application: 25.06.2025
(60) Divisional application: 26204131.2 / 4 832 201
(73) Proprietor: LG Energy Solution, Ltd., Seoul 07335 (KR)
(72) Inventor: CHUNG, Se-Yun, Daejeon 34122 (KR); KANG, Dal-Mo, Daejeon 34122 (KR); CHI, Ho-June, Daejeon 34122 (KR); KWON, Woo-Yong, Daejeon 34122 (KR); KIM, Seung-Joon, Daejeon 34122 (KR); KIM, In-Soo, Daejeon 34122 (KR); PARK, Jin-Yong, Daejeon 34122 (KR)
(74) Representative: Plasseraud IP
(86) International application number: PCT/KR2024/095199
(87) International publication number: WO 2024/172554

(56) References cited:
- WO-A1-2022/255787
- CN-A- 112 751 121
- CN-U- 217 114 682
- KR-A- 20200 139 202
- KR-A- 20210 051 543
- KR-A- 20210 063 939
- KR-A- 20220 163 202
- US-A1- 2016 351 883
- US-A1- 2021 384 585
- US-A1- 2022 037 736
- US-A1- 2022 123 429

## Description

### TECHNICAL FIELD

The present disclosure relates to a battery unit structure and a vehicle including the same, and more specifically, it relates to a battery unit structure in which a venting area expands due to rupture caused by increased internal pressure even if a mesh portion is clogged with materials (e.g., spark materials including metals and active materials included in electrodes) generated by events such as thermal runaway, thereby discharging gas and preventing ejection of materials and flame, and a vehicle including the same.

The present application claims priority to Korean Patent Application No. 10-2023-0020357 filed on February 15, 2023 in the Republic of Korea.

### BACKGROUND ART

As the demand for portable electronic products such as laptops, video cameras, and portable phones is rapidly increased, and as the commercialization of robots and electric vehicles, or the like is accelerated, active researches on high-performance secondary batteries capable of being repeated charged and discharged are underway.

Currently commercialized secondary batteries include nickel-cadmium batteries, nickel-hydrogen batteries, nickel-zinc batteries, and lithium secondary batteries. Among these, lithium secondary batteries are in the spotlight for their advantages of free charging and discharging due to almost no memory effect, a very low self-discharge rate, and a high energy density, compared to nickel-based secondary batteries.

These lithium secondary batteries generally use lithium-based oxides and carbon materials as positive and negative electrode active materials, respectively. The lithium secondary batteries an electrode assembly in which positive and negative electrode plates, coated with the positive and negative electrode active materials, respectively, are disposed with a separator therebetween, and an exterior case, i.e., a battery case, that seals and stores the electrode assembly with an electrolyte.

Meanwhile, lithium secondary batteries may be classified, depending on the shape of a battery case, into can-type secondary batteries in which the electrode assembly is accommodated in a metal can and pouch-type secondary batteries in which the electrode assembly is accommodated in a pouch of an aluminum laminate sheet.

Recently, secondary batteries have been widely used for driving or energy storage in electric vehicles and medium to large devices such as energy storage systems (ESSs), as well as in small devices such as portable electronic devices. Multiple secondary batteries may be electrically connected to each other and stored inside a module case to form a battery module, and these battery modules and/or battery cells may be electrically connected in a narrow space to increase energy density, thereby producing a battery pack.

However, if a large number of battery modules and/or battery cells are densely stored in a small space, they may be vulnerable to accidents such as fire or explosion. Therefore, existing battery unit structures, such as battery modules or battery packs, have a venting hole for discharging gas when an event such as thermal runaway occurs therein and a mesh member to prevent the discharge of materials such as spark materials including metals and active materials included in the electrodes during venting.

However, the venting hole and the mesh member are clogged with the materials generated when an event such as thermal runaway occurs so that internal pressure excessively increases, causing fire or explosion in the battery unit structure. Therefore, a new battery unit structure having a structure to solve the above problems is required to be developed.

US2022123429 relates to a battery module, battery rack and power storage device comprising battery module.

### DISCLOSURE

### Technical Problem

The present disclosure has been designed to solve the problems of the related art, and therefore the present disclosure is directed to providing a battery unit structure configured such that a venting area expands due to rupture caused by increased internal pressure even if the venting hole is clogged with materials generated by events such as thermal runaway, thereby discharging gas and preventing ejection of materials and flame.

However, the technical problems that the present disclosure seeks to solve are not limited to the above-mentioned problems, and other problems not mentioned above will be clearly understood by those skilled in the art from the description of the invention described below.

### Technical Solution

The invention is defined by the appended independent claim 1. Additional embodiments are defined in the dependent claims.

The venting hole may be configured to overlap a portion of the mesh portion.

The rupture portion may be configured to overlap a portion of the mesh portion.

The mesh portion may be configured to discharge gas among materials generated during venting of the battery cell and prevent spark materials including metals and active materials included in electrodes from being discharged.

The rupture portion may be located adjacent to the venting hole.

The rupture portion may include a plurality of vulnerable portions configured to have lower strength than surrounding portions.

The plurality of vulnerable portions may be formed along at least one straight line having a predetermined length.

The plurality of vulnerable portions may be formed to be spaced a predetermined distance apart from each other.

The venting portion may include a guide portion configured to guide the gas from the venting hole to the mesh portion.

The guide portion may protrude from the perimeter of the venting hole toward the mesh portion.

According to another aspect of the present disclosure, there is provided a vehicle including the battery unit structure according to the present disclosure.

### Advantageous Effects

According to one aspect of the present disclosure, in the battery unit structure, the venting area is preferentially designed to be small at the beginning and configured to expand by rupture when the mesh portion is clogged, thereby minimizing the inflow of oxygen and facilitating gas discharge.

According to the present disclosure, if spark materials that may be generated with gas block the mesh member during venting, the venting area expands by rupture to continuously and effectively discharge gas and prevent ejection of spark materials and/or flame.

However, the effects obtainable from the present disclosure are not limited to the above-mentioned effects, and other effects not mentioned above will be clearly understood by those skilled in the art from the description of the invention described below.

### DESCRIPTION OF DRAWINGS

The accompanying drawings illustrate a preferred embodiment of the present disclosure and, together with the detailed description of the invention, serve to provide further understanding of the technical idea of the present disclosure, and thus, the present disclosure is not construed as being limited to the drawings.
FIG. 1 is a perspective view illustrating the appearance of a battery unit structure according to the present disclosure.
FIG. 2 is an exploded perspective view illustrating a battery unit structure according to the present disclosure.
FIG. 3 is a diagram illustrating a battery housing included in a battery unit structure according to the present disclosure.
FIGS. 4 to 7 are front views of a battery housing included in a battery unit structure according to the present disclosure.
FIG. 8 is a diagram illustrating a battery housing included in a battery unit structure according to the present disclosure.
FIG. 9 is a schematically cross-sectional view taken by way of example along line A-A' in FIG. 8.
FIG. 10 is a diagram illustrating a vehicle according to the present disclosure.

### BEST MODE

Hereinafter, preferred embodiments of the present disclosure will be described in detail with reference to the accompanying drawings. The accompanying drawings illustrate a preferred embodiment of the present disclosure and, together with the detailed description of the invention, serve to provide further understanding of the technical idea of the present disclosure, and thus, the present disclosure is not construed as being limited to the drawings. The same reference numerals indicate the same elements in the attached drawings. **In** addition, the thicknesses, ratios, and sizes of the elements in the attached drawings may be exaggerated in order to effectively explain the technical features of the present disclosure.

It should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Although terms indicating directions such as upward, downward, left, right, forward, and backward directions are used in this specification, it is obvious to those skilled in the art that these terms are only for convenience of explanation and may vary depending on the position of the target object or the position of the observer.

Therefore, the configurations proposed in the embodiments and drawings of this specification indicate only the most preferable embodiment of the present disclosure and do not represent all technical ideas of the present disclosure.

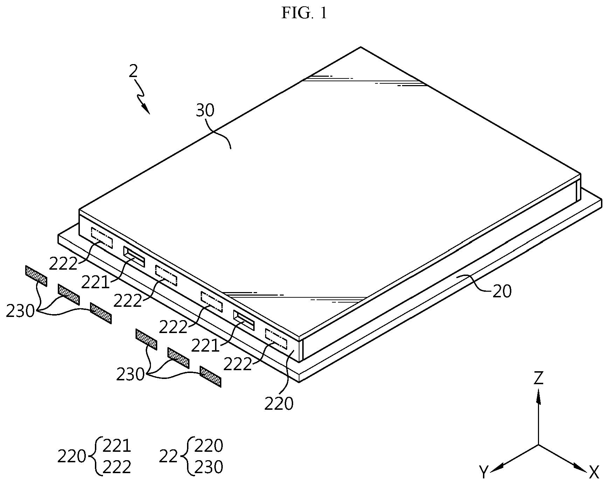

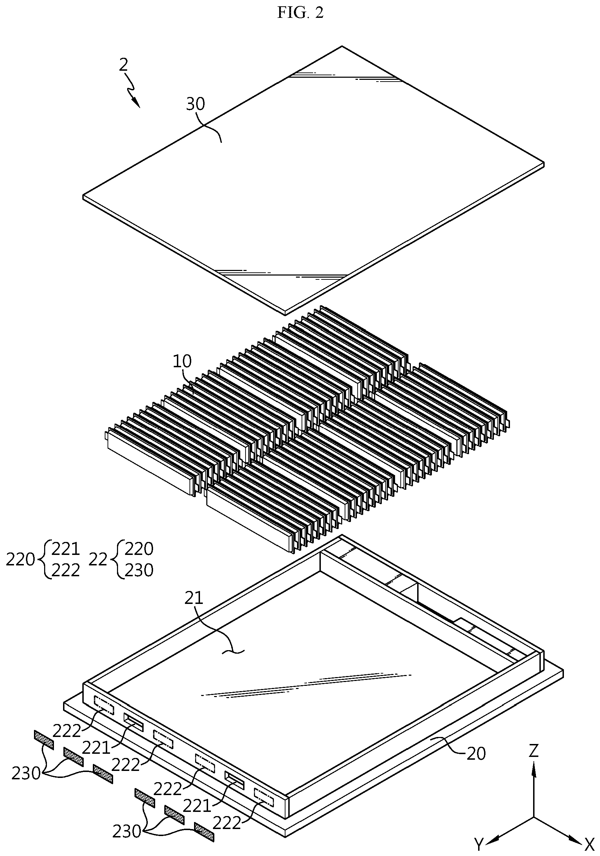

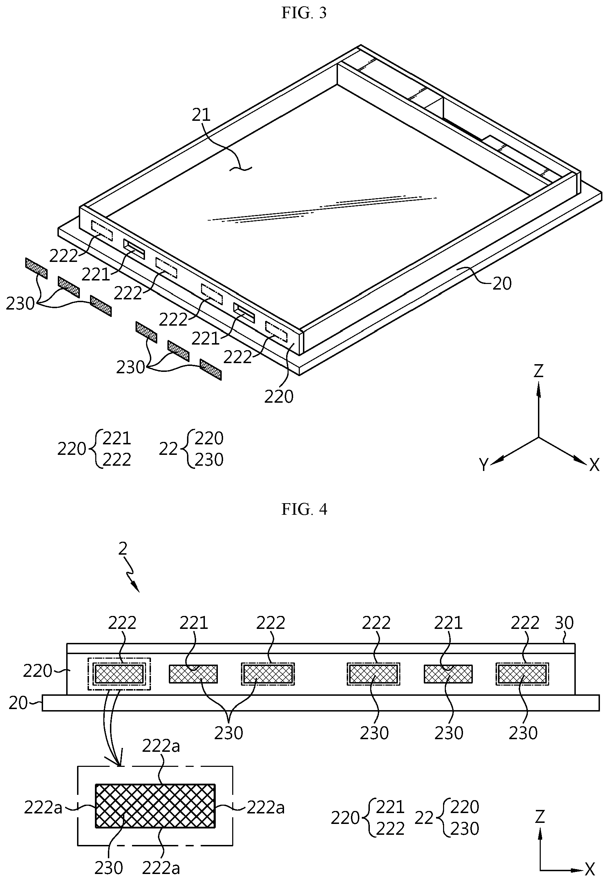

FIG. 1 is a perspective view illustrating the appearance of a battery unit structure according to the present disclosure. FIG. 2 is an exploded perspective view illustrating a battery unit structure according to the present disclosure. FIG. 3 is a diagram illustrating a battery housing included in a battery unit structure according to the present disclosure.

Referring to FIGS. 1 to 3, a battery unit structure 2 according to the present disclosure includes a battery cell 10, a battery housing 20, and a battery cover 30.

A plurality of battery cells 10 may be provided. The battery cell 10 may indicate a secondary battery. The battery cell 10 may include an electrode assembly, an electrolyte, a battery case accommodating the electrode assembly and the electrolyte, and a pair of electrode leads connected to the electrode assembly and extending to the outside of the battery case. The battery cell 10 may be, for example, a pouch-type secondary battery. However, other types of secondary batteries, such as cylindrical batteries or prismatic batteries, may also be applied to the battery cell 10 in the present disclosure.

The battery housing 20 has an accommodation space 21 and a venting portion 22. The accommodation space 21 is configured to accommodate the battery cells 10 therein. The venting portion 22 is provided on at least one side of the battery housing 20. The venting portion 22 is configured to discharge gas generated from the battery cells 10 to the outside of the battery housing 20. The venting portion 22 may be provided at a position where gas generated inside the battery unit structure 2 is required to be discharged. A plurality of venting portions 22 may be provided.

The battery cover 30 is configured to cover the battery cells 10. The battery cover 30 may have a plate shape. The battery cover 30 may be coupled to the battery housing 20 so as to cover the battery cells 10. The battery cover 30 may be coupled to the battery housing 20 so as to cover the accommodation space 21. The coupling may be performed by bolting or welding.

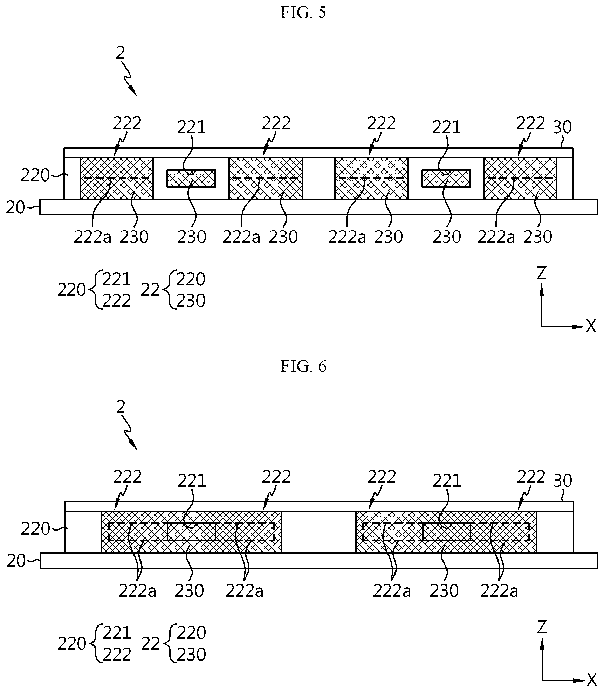

FIGS. 4 and 5 are front views of a battery housing included in a battery unit structure according to the present disclosure.

Referring to FIGS. 4 and 5, the venting portion 22 includes a discharge portion 220 and a mesh portion 230.

The discharge portion 220 includes a venting hole 221 and a rupture portion 222.

The venting hole 221 is configured to discharge gas. The venting hole 221 may be configured in the form of a simple hole passing through the battery housing 20. However, the venting hole 221 is not limited to a completely open-type hole. The venting hole 221 may be configured to be closed in a normal state, instead of being completely open, and to open depending on a change in pressure or temperature. For example, the venting hole 221 may be a hole configured to be open and closed according to the pressure of gas generated inside the battery housing 20 by applying a one-way valve.

The rupture portion 222 is configured to rupture if the internal pressure of the accommodation space 21 reaches a predetermined pressure or more. The rupture portion 222 may be configured to have lower strength than the surrounding portions. The rupture portion 222 may indicate a specific area configured to have lower strength than the surrounding portions.

The mesh portion 230 faces the accommodation space 21 with the discharge portion 220 therebetween. The mesh portion 230 may be provided on the outermost side of the battery housing 20. The mesh portions 230 may be mesh members provided in the respective areas corresponding to the venting hole 221 and the rupture portion 222. The mesh portion 230 may be configured to cover the entire area corresponding to the venting hole 221 and the rupture portion 222. The mesh portion 230 may have a plate shape disposed to face the discharge portion 220. The mesh portion 230 may be a member provided separately from the discharge portion 220. The mesh portions 230 may include mesh members provided in the respective areas corresponding to the venting hole 221 and the rupture portion 222. The mesh portion 230 and the venting hole 221 may have a predetermined space therebetween.

The mesh portion 230 may be configured to discharge gas among the materials generated during venting of the battery cell 10 and prevent spark materials including metals and active materials included in electrodes from being discharged. The mesh portion 230 may be a mesh configured in a dense lattice.

The venting hole 221 may be configured to overlap a portion of the mesh portion 230. The venting hole 221 may be entirely covered by the mesh portion 230. At least a portion of the remaining area of the mesh portion 230, excluding the area overlapping the venting hole 221, may be configured to overlap the rupture portion 222.

The rupture portion 222 may be configured to overlap a portion of the mesh portion 230. The rupture portion 222 may be entirely covered by the mesh portion 230. At least a portion of the remaining area of the mesh portion 230, excluding the area overlapping the rupture portion 222, may be configured to overlap the venting hole 221.

The battery unit structure 2 according to the present disclosure described above may be a battery module. The battery module may include, for example, a cell assembly including a plurality of battery cells 10 electrically connected to each other and a module housing for accommodating the cell assembly. However, the battery unit structure 2 of the present disclosure is not limited thereto. The battery unit structure 2 may be a battery pack. Such a battery pack may be a battery pack manufactured through a cell-to-pack process without going through a process of manufacturing the battery modules, as well as a battery pack including a plurality of battery modules. That is, the venting portion 22 according to the present disclosure may be provided in the battery module housing and/or pack housing.

If the venting hole 221 provided in the battery module housing and/or pack housing is designed to be large to include the area corresponding to the rupture portion 222 at the beginning, gas discharge is easy, but oxygen easily flows in from the outside, thereby increasing the risk of fire.

However, according to this structure of the present disclosure, the venting area may not be designed to be large at the beginning. The venting area is designed to expand by the rupture of the rupture portion 222 if the mesh portion 230 is clogged, thereby solving the above problem. In addition, in the case where gas and spark materials including metal and active materials included in the electrodes are generated due to an event such as thermal runaway inside the battery unit structure 2, even if the mesh portion 230 is clogged with the spark materials that may be generated along with the gas during venting, the venting area expands by rupture of the rupture portion 222, thereby continuously and effectively discharging gas and preventing ejection of the spark materials and/or flame.

Referring back to FIG. 5, the rupture portion 222 may be located adjacent to the venting hole 221. According to this configuration, if the mesh portion 230 is clogged, the rupture portion 222 may more easily rupture by the gas heading toward the venting hole 221.

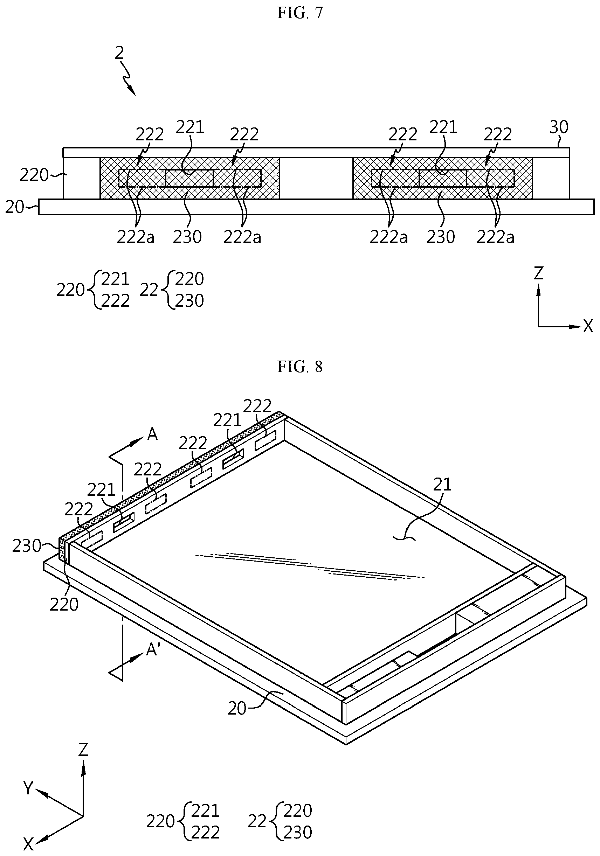

FIGS. 6 and 7 are front views of a battery housing included in a battery unit structure according to the present disclosure.

Referring to FIGS. 6 and 7, the rupture portion 222 may include a plurality of vulnerable portions 222a.

The plurality of vulnerable portions 222a may be configured to have lower strength than the surrounding portions. Each of the plurality of vulnerable portions 222a may be an area formed to be thinner than the surrounding area by grooves having a predetermined length. The plurality of vulnerable portions 222a may be formed along at least one straight line having a predetermined length. Referring to FIG. 6, the plurality of vulnerable portions 222a may be formed along a straight line having a predetermined length in the X-axis direction. The plurality of vulnerable portions 222a may be formed to be spaced a predetermined distance apart from each other. On the other hand, the plurality of vulnerable portions 222a may be formed continuously, instead of being spaced apart from each other.

In another aspect, the plurality of vulnerable portions 222a may be formed substantially in a closed loop, instead of the straight line described above. In this case, when rupture occurs along the plurality of vulnerable portions 222a, venting holes may be respectively provided in the areas corresponding to the plurality of vulnerable portions 222a, so that the venting area may expand. However, as shown in FIG. 7, in the case where the rupture portion 222 is configured to be connected to the venting hole 221, the plurality of vulnerable portions 222a may not form a completely closed loop. In this case, when rupture occurs along the plurality of vulnerable portions 222a, the areas corresponding to the plurality of vulnerable portions 222a may be connected to the venting hole 221 so that the size of the venting hole may increase, enabling the venting area to expand.

According to this configuration of the present disclosure, rupture may easily occur along the plurality of vulnerable portions 222a. In addition, the battery unit structure 2 may be designed such that the venting area expands into a desired shape depending on the arrangement positions and shapes of the plurality of vulnerable portions 222a.

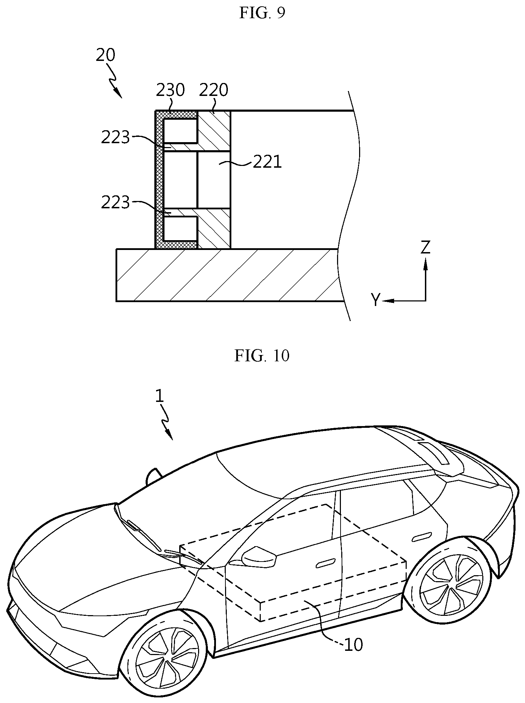

FIG. 8 is a diagram illustrating a battery housing 20 included in a battery unit structure 2 according to the present disclosure. FIG. 9 is a schematically cross-sectional view taken by way of example along line A-A' in FIG. 8.

Referring to FIGS. 8 and 9, the venting portion 22 may include a guide portion 223.

The guide portion 223 may be configured to guide gas from the venting hole 221 to the mesh portion 230. The guide portion 223 may protrude from the perimeter of the venting hole 221 toward the mesh portion 230. The guide portion 223 may extend from the outer end of the venting hole 221 to the mesh portion 230 (in the +Y-axis direction).

According to this configuration of the present disclosure, the guide portion 223 may guide the flow of gas from the venting hole 221 to the mesh portion 230, facilitating gas discharge.

FIG. 10 is a diagram illustrating a vehicle 1 according to the present disclosure.

Referring to FIG. 10, the vehicle 1 may include a battery unit structure 2. The vehicle 1 may be a hybrid vehicle 1 or an electric vehicle 1. The vehicle 1 according to the present disclosure may further include various other components included in the vehicle 1, in addition to the battery unit structure 2. For example, the vehicle 1 according to the present disclosure may further include a car body, a motor, and a control device such as an ECU (electronic control unit), in addition to the battery unit structure 2 according to the present disclosure.

As described above, although the present disclosure has been described based on preferred embodiments with reference to the attached drawings, it is clear to those skilled in the art that various and obvious modifications can be made, Accordingly, the scope of the present disclosure should be construed by the claims to encompass examples of various modifications.

### [Description of Reference Numerals]

1 : Vehicle
2 : Battery unit structure
10 : Battery cell
20 : Unit structure housing
21 : Accommodation space
22 : Venting portion
30 : Battery cover
220 : Discharge portion
221 : Venting hole
222 : Rupture portion
222a : Multiple vulnerable portions
223 : Guide portion
230 : Mesh portion

## Claims

1. A battery unit structure (2) comprising:
a battery cell (10);
a battery housing (20) having an accommodation space (21) configured to accommodate the battery cell (10) therein and comprising a venting portion (22) configured to discharge gas generated from the battery cell on at least one side thereof; and
a battery cover (30) configured to cover the battery cell (10),
wherein the venting portion (22) comprises:
a discharge portion (220) comprising a venting hole (221) configured to discharge the gas and a rupture portion (222) configured to rupture if internal pressure of the accommodation space (21) reaches a predetermined pressure or more; and
a mesh portion (230) positioned to face the accommodation space (21) with the discharge portion (220) therebetween,
**characterized in that**
the rupture portion (222) is configured to rupture if the mesh portion (230) is clogged.

2. The battery unit structure according to claim 1,
wherein the venting hole is
configured to overlap a portion of the mesh portion.

3. The battery unit structure according to claim 1,
wherein the rupture portion is
configured to overlap a portion of the mesh portion.

4. The battery unit structure (2) according to claim 1,
wherein the mesh portion (230) is
configured to discharge gas among materials generated during venting of the battery cell (10) and prevent spark materials including metals and active materials included in electrodes from being discharged.

5. The battery unit structure according to claim 1,
wherein the rupture portion is
located adjacent to the venting hole.

6. The battery unit structure according to claim 1,
wherein the rupture portion comprises
a plurality of vulnerable portions configured to have lower strength than surrounding portions.

7. The battery unit structure (2) according to claim 6,
wherein the plurality of vulnerable portions (222a) are
formed along at least one straight line having a predetermined length.

8. The battery unit structure (2) according to claim 6,
wherein the plurality of vulnerable portions (222a) are
formed to be spaced a predetermined distance apart from each other.

9. The battery unit structure (2) according to claim 1,
wherein the venting portion (22) comprises
a guide portion (223) configured to guide the gas from the venting hole (221) to the mesh portion (230).

10. The battery unit structure (2) according to claim 9,
wherein the guide portion (223)
protrudes from the perimeter of the venting hole (221) toward the mesh portion (230).

11. A vehicle (1) comprising the battery unit structure (2) according to any one of claims 1 to 10.

## Patentansprüche

1. Batterieeinheitsstruktur (2), umfassend:
• eine Batteriezelle (10);
• ein Batteriegehäuse (20) mit einem Aufnahmeraum (21), der so ausgebildet ist, dass er die Batteriezelle (10) darin aufnimmt, und umfassend einen Entlüftungsabschnitt (22), der so ausgebildet ist, dass er von der Batteriezelle erzeugtes Gas auf mindestens einer Seite davon abführt; und
• eine Batterieabdeckung (30), die so ausgebildet ist, dass sie die Batteriezelle (10) abdeckt,
wobei der Entlüftungsabschnitt (22) Folgendes umfasst:
• einen Abgabeabschnitt (220), der ein Entlüftungsloch (221), das so ausgebildet ist, dass es das Gas abführt, und einen Bruchabschnitt (222) umfasst, der so ausgebildet ist, dass er bricht, wenn ein Innendruck des Aufnahmeraums (21) einen vorbestimmten Druck oder mehr erreicht; und
• einen Maschenabschnitt (230), der so positioniert ist, dass er dem Aufnahmeraum (21) zugewandt ist, wobei sich der Abgabeabschnitt (220) dazwischen befindet,
**dadurch gekennzeichnet, dass**
der Bruchabschnitt (222) so ausgebildet ist, dass er bricht, wenn der Maschenabschnitt (230) verstopft ist.

2. Batterieeinheitsstruktur nach Anspruch 1,
wobei das Entlüftungsloch so ausgebildet ist, dass es einen Abschnitt des Maschenabschnitts überlappt.

3. Batterieeinheitsstruktur nach Anspruch 1,
wobei der Bruchabschnitt so ausgebildet ist, dass er einen Abschnitt des Maschenabschnitts überlappt.

4. Batterieeinheitsstruktur (2) nach Anspruch 1,
wobei der Maschenabschnitt (230) so ausgebildet ist, dass er Gas unter Materialien abführt, die während des Entlüftens der Batteriezelle (10) erzeugt werden, und verhindert, dass Funkenmaterialien einschließlich Metallen und in Elektroden enthaltenen Aktivmaterialien abgeführt werden.

5. Batterieeinheitsstruktur nach Anspruch 1,
wobei der Bruchabschnitt angrenzend an das Entlüftungsloch angeordnet ist.

6. Batterieeinheitsstruktur nach Anspruch 1,
wobei der Bruchabschnitt eine Vielzahl von schwachen Abschnitten umfasst, die so ausgebildet sind, dass sie eine geringere Festigkeit als umgebende Abschnitte aufweisen.

7. Batterieeinheitsstruktur (2) nach Anspruch 6,
wobei die Vielzahl von schwachen Abschnitten (222a) entlang mindestens einer geraden Linie mit einer vorbestimmten Länge ausgebildet ist.

8. Batterieeinheitsstruktur (2) nach Anspruch 6,
wobei die Vielzahl von schwachen Abschnitten (222a) so ausgebildet ist, dass sie um einen vorbestimmten Abstand voneinander beabstandet sind.

9. Batterieeinheitsstruktur (2) nach Anspruch 1,
wobei der Entlüftungsabschnitt (22) einen Führungsabschnitt (223) umfasst, der so ausgebildet ist, dass er das Gas von dem Entlüftungsloch (221) zu dem Maschenabschnitt (230) führt.

10. Batterieeinheitsstruktur (2) nach Anspruch 9,
wobei der Führungsabschnitt (223) vom Umfang des Entlüftungslochs (221) in Richtung des Maschenabschnitts (230) vorsteht.

11. Fahrzeug (1), umfassend die Batterieeinheitsstruktur (2) nach einem der Ansprüche 1 bis 10.

## Revendications

1. Structure d'unité de batterie (2) comprenant :
• une cellule de batterie (10) ;
• un logement de batterie (20) présentant un espace de logement (21) configuré pour loger la cellule de batterie (10) à l'intérieur et comprenant une portion d'évent (22) configurée pour évacuer un gaz généré à partir de la cellule de batterie sur au moins un côté de celle-ci ; et
• un couvercle de batterie (30) configuré pour recouvrir la cellule de batterie (10),
dans laquelle la portion d'évent (22) comprend :
• une portion d'évacuation (220) comprenant un trou d'évent (221) configuré pour évacuer le gaz et une portion de rupture (222) configurée pour se rompre si une pression interne de l'espace de logement (21) atteint une pression prédéterminée ou plus ; et
• une portion de maille (230) positionnée pour faire face à l'espace de logement (21) avec la portion d'évacuation (220) entre eux,
**caractérisée en ce que**
la portion de rupture (222) est configurée pour se rompre si la portion de maille (230) est obstruée.

2. Structure d'unité de batterie selon la revendication 1,
dans laquelle le trou d'évent est configuré pour chevaucher une partie de la portion de maille.

3. Structure d'unité de batterie selon la revendication 1,
dans laquelle la portion de rupture est configurée pour chevaucher une partie de la portion de maille.

4. Structure d'unité de batterie (2) selon la revendication 1,
dans laquelle la portion de maille (230) est configurée pour évacuer le gaz parmi des matières générées pendant le dégazage de la cellule de batterie (10) et empêcher des matières d'allumage comprenant des métaux et des matières actives incluses dans des électrodes d'être évacuées.

5. Structure d'unité de batterie selon la revendication 1,
dans laquelle la portion de rupture est située de manière adjacente au trou d'évent.

6. Structure d'unité de batterie selon la revendication 1,
dans laquelle la portion de rupture comprend une pluralité de portions vulnérables configurées pour avoir une résistance inférieure à celle de portions environnantes.

7. Structure d'unité de batterie (2) selon la revendication 6,
dans laquelle la pluralité de portions vulnérables (222a) sont formées le long d'au moins une ligne droite ayant une longueur prédéterminée.

8. Structure d'unité de batterie (2) selon la revendication 6,
dans laquelle la pluralité de portions vulnérables (222a) sont formées de manière à être espacées d'une distance prédéterminée les unes des autres.

9. Structure d'unité de batterie (2) selon la revendication 1,
dans laquelle la portion d'évent (22) comprend une portion de guidage (223) configurée pour guider le gaz depuis le trou d'évent (221) vers la portion de maille (230).

10. Structure d'unité de batterie (2) selon la revendication 9,
dans laquelle la portion de guidage (223) fait saillie depuis le périmètre du trou d'évent (221) vers la portion de maille (230).

11. Véhicule (1) comprenant la structure d'unité de batterie (2) selon l'une quelconque des revendications 1 à 10.
